# EUROPEAN PATENT APPLICATION

(11) **EP 1 972 780 A1**
(43) Date of publication of application: **24.09.2008**
(21) Application number: 08250263.4
(22) Date of filing: 21.01.2008
(51) Int. Cl.: F02P 5/152, G01L 23/22

(54) **Vehicle diagnosis system and method**

(30) Priority: 15.03.2007 GB 0705026
(71) Applicant: Delphi Technologies, Inc., Troy, Michigan 48007 (US)
(72) Inventor: Orifij, Murad, London W3 7PQ (GB)
(74) Representative: Richardson, Mark Jonathan

(57) **Abstract**

A method for determining a fault condition of a fuel system of an engine, the engine comprising at least one cylinder (C1-C6), the or each cylinder comprising a combustion chamber into which fuel is injected by an associated fuel injector of the fuel system and within which, in use, combustion events occur throughout a cycle of the cylinder, and at least one sensor (A1, A2) for providing an output signal which is representative of the combustion events within the or each cylinder, the method comprising: (i) analysing the output signal from the at least one sensor (A1, A2) so as to identify the occurrence of a combustion event in the or each cylinder; (ii) for the or each cylinder, integrating the output signal to provide an integrated output signal; (iii) calculating a first gradient measurement for a first section of the integrated output signal for the or each cylinder, and (iv) comparing the first gradient measurement with at least a second gradient measurement to identify the presence and nature of a fault type within the associated cylinder.

## Description

### Field of the Invention

This invention relates to a vehicle diagnosis method. In particular, the invention relates to a diagnosis method for diagnosing faults in a fuel system of a vehicle that cause variations in exhaust emission levels. The invention extends to a method of diagnosing faults in the fuel system and to a diagnostic system or unit for implementing said method.

### Background of the Invention

With the introduction of stricter emission regulations (particularly in the USA), on-board diagnostic (OBD) requirements have emerged aimed at indicating faults causing excessive vehicle emission levels (emission threshold based diagnosis). These requirements include identification of the source of the fault for a quick and guided repair of the problem.

One of the systems requiring fault indication is the vehicle's fuel delivery system. New regulations require diagnosis of faults in fuel injection quantity, pressure and timing which may cause either an increase or decrease in the quality and/or quantity of combustion and thus a variation in the emission levels. It is a requirement that current fault diagnosis systems need to work reliably across the full range of operation of the vehicle's engine (speed and load) and to be robust to variations in ambient conditions (e.g. atmospheric pressure), driving conditions and fuel quality.

To date, accelerometers (referred to as "knock" sensors) have been widely used for cylinder misfire detection, with the knock sensor output being fed back to the engine control unit which then compensates for the misfire by adjusting operation of the other cylinders. At present, however, knock sensors have not been used for specific fault identification.

It is an object of the present invention to provide a diagnostic system or method which allows reliable diagnosis or identification of fault conditions within an engine fuel system across the full range of operation of the vehicle's engine.

### Summary of the Invention

According to a first aspect of the present invention, there is provided a method for determining a fault condition of a fuel system of an engine having at least one cylinder, the or each cylinder comprising a combustion chamber into which fuel is injected by an associated fuel injector of the fuel system and within which, in use, combustion events occur throughout a cycle of the cylinder, and at least one sensor (e.g. accelerometer) for providing an output signal which is representative of the combustion events within the or each cylinder. The method comprises (i) analysing the output signal from the at least one sensor so as to identify the occurrence of combustion events in the or each cylinder, and (ii), for the or each cylinder, integrating the output signal to provide an integrated output signal. A first gradient measurement is calculated for a first section of the integrated output signal for the or each cylinder (step (iii)), and the first gradient measurement is compared with at least a second gradient measurement (step (iv)) to identify the presence and nature of a fault type within the associated cylinder.

In a preferred embodiment, the method includes calculating the second gradient measurement which is the gradient for a second section of the integrated output signal for the or each cylinder, and, in step (iv), comparing the first gradient measurement and the second gradient measurement with one another to identify the presence and nature of the fault type within the associated cylinder.

The method provides an accurate means for determining not only the existence of a fault condition within an engine cylinder, but also the specific nature of the fault that has occurred (for example, low injection pressure caused by pump failure, injector stuck open failure). As the gradient measurements are derived for each engine cylinder, it is possible to identify the presence and nature of the fault, even where different cylinders suffer different types of fault. Moreover, as a comparison of the first and second gradient measurements alone can identify the fault, the method is independent of variations in ambient conditions (e.g. driving conditions, engine wear over a period of time).

In a particularly preferred embodiment, the output signal from the at least one sensor includes positive and negative components, the method further comprising rectifying the output signal from the at least one sensor to remove the negative components of the output signal, and integrating the rectified output signal to provide the integrated output signal.

The output signal from the or each sensor may also be filtered prior to the rectification or integration step so as to remove unwanted low and/or high frequencies from the signal that are not representative of combustion events of interest (e.g. frequencies due to engine vibration, road noise).

It will be appreciated that the references to the first, second and third gradient measurements are interchangeable with respect to which represents an early phase of the cylinder cycle (e.g. pilot or pre-injection), which represents a mid-phase of the cylinder cycle (e.g. main injection) and which represents a late phase of the cylinder cycle (e.g. post injection).

Further preferred and optional features of the invention are set out in the dependent claims. It will be appreciated that any of the preferred and/or optional features of the method of claims 1 to 15 may be implemented in the diagnostic unit of claims 16 and 17 also.

According to a second aspect of the invention, there is provided a diagnostic unit including means for putting the method of the first aspect of the invention into effect.

In another aspect of the invention, there is provided an engine control unit including the diagnostic unit of the second aspect of the invention.

A further aspect of the invention relates to a data carrier arranged to configure a diagnostic unit or an engine control unit to implement the method according to the first aspect of the invention.

### Brief Description of the Drawings

In order that the invention may be more readily understood, reference will now be made, by way of example, to the accompanying drawings in which:
Figure 1 is a schematic diagram of an engine comprising six cylinders, each with an associated fuel injector, and first and second accelerometer sensors, to which the method of the invention may be applied,
Figure 2 is a schematic illustration of a flywheel mounted on the crankshaft of the engine in Figure 1,
Figure 3(a) is a graph to illustrate the cylinder firing order for a 720° rotation of the engine crankshaft,
Figure 3(b) is a graph to illustrate the tooth position of a toothed flywheel of the engine crankshaft,
Figure 3(c) is a graph to illustrate a sensor output signal from a cylinder pressure sensor provided in the sixth cylinder in Figure 1,
Figure 3(d) is a graph to illustrate the unfiltered voltage output signal from the first accelerometer sensor in Figure 1,
Figure 3(e) is a graph to illustrate the unfiltered voltage output signal from the second accelerometer sensor in Figure 1,
Figure 4 is a flow diagram to illustrate the steps of the fault diagnosis method of the invention,
Figure 5(a) is a graph to illustrate an unfiltered output signal from the first accelerometer sensor in Figure 1, in another example,
Figure 5(b) is a graph to illustrate the output signal in Figure 5(a) when a filter has been applied to remove contributions from frequencies outside a specified range,
Figure 6 is a graph to illustrate a section of the filtered output signal in Figure 5(b), representing combustion events in only one of the cylinders of Figure 1,
Figure 7 is a graph to illustrate rectification of the section of the filtered output signal in Figure 6,
Figure 8 is a graph to illustrate the accumulated integration of the rectified signal in Figure 7, over part of one cylinder cycle, and
Figure 9 shows a straight line approximation of an averaged accumulated integration of the rectified signal, such as that shown in Figure 8, for a variety of fault conditions.

### Detailed Description of Preferred Embodiments

In a compression-injection internal combustion engine, such as a diesel engine, combustion takes place within one or more combustion chambers or cylinders, each chamber being defined partly by a reciprocating cylinder piston and partly by the walls of a cylinder bore formed in a cylinder head. The piston slides within the cylinder so that, when the engine is running, the volume of the combustion chamber cyclically increases and decreases. When the combustion chamber is at its minimum volume, the piston is said to be at 'top dead centre' (TDC), and when the combustion chamber is at its maximum volume, the piston is said to be at 'bottom dead centre' (BDC). An associated injector is arranged to inject fuel into the cylinder at an appropriate point in the cylinder cycle, resulting in combustion of the fuel within the cylinder.

The present invention is particularly beneficial when used in a fuel system in which a dedicated electronic unit pump (EUP) is arranged to supply pressurised fuel to a dedicated injector through a supply pipe, or in which injection to the cylinders is by means of an electronic unit injector (EUI) in which the pumping element and its dedicated injector are housed within the same unit. The injector comprises a needle valve for controlling the injection of fuel, which has been pressurised by the dedicated pumping element, into the cylinder. The invention is also applicable to common rail fuel systems in which a common source of pressurised fuel supplies two or more injectors of the fuel system, or to fuel systems incorporating a common rail and one or more EUls/EUPs.

For the purpose of the following description, it will be assumed that the engine is a six cylinder engine and is of the type in which six EUPs are provided, each for supplying fuel to an associated injector of a respective one of the engine cylinders. The EUPs are controlled by means of an engine control unit (ECU) which forms a part of the engine management system. The ECU incorporates a diagnostic means (a diagnostic unit) for determining the nature of faults occurring in the engine cylinders, in use, in accordance with a first aspect of the invention.

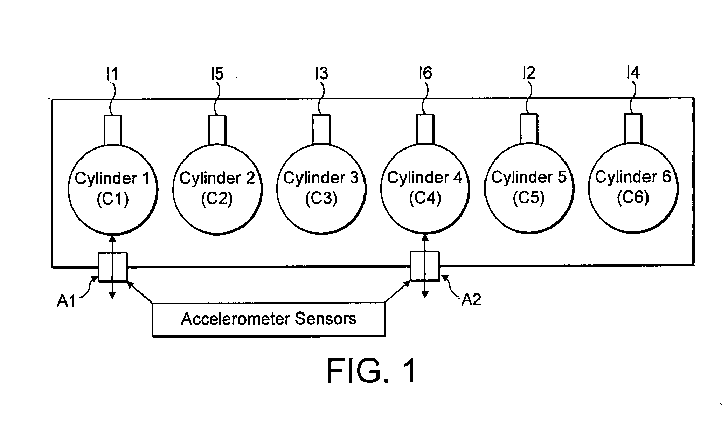

Referring to Figure 1, the engine includes six cylinders, C1 to C6, each having an associated injector, 11 to 16, for injecting into its associated cylinder. In this engine the firing order for the cylinders is C1, C5, C3, C6, C2, C4 (i.e. the injectors fire in the order I1, I2, I3, I4, I5, I6), as controlled by the ECU (not shown), although in a different engine the firing order may be different.

A first sensor A1 is positioned on the cylinder head or cylinder block of the first cylinder C1, and a second sensor A2 is positioned on the cylinder head or cylinder block of the fourth cylinder C4. The first and second sensors A1, A2 are preferably mounted on the "cold" side of the engine and each provides an output signal to the ECU. The first and second sensors A1, A2 are typically accelerometer sensors, such as piezoelectric devices, which provide a voltage output signal to the ECU which is indicative of activity within the engine (e.g. combustion events). The sensors A1, A2 may take the form of an accelerometer, a vibrometer or any other sensor for measuring and analyzing linear velocity, displacement and proximity, or acceleration.
The piston of each cylinder (not shown in Figure 1) is connected to a cranked portion of a crankshaft by way of a connecting rod with a flywheel mounted on one end of the crankshaft. The reciprocating motion of the cylinder piston therefore corresponds to rotary motion of the crankshaft, and it is customary in the art to define the position of the piston according to the angle of the cranked portion of the crankshaft, with TDC corresponding to a crank angle of zero degrees. During a complete internal combustion cycle, comprising intake, compression, power and exhaust strokes of the piston, the crankshaft undergoes two whole revolutions, corresponding to a crank angle movement of 720°.

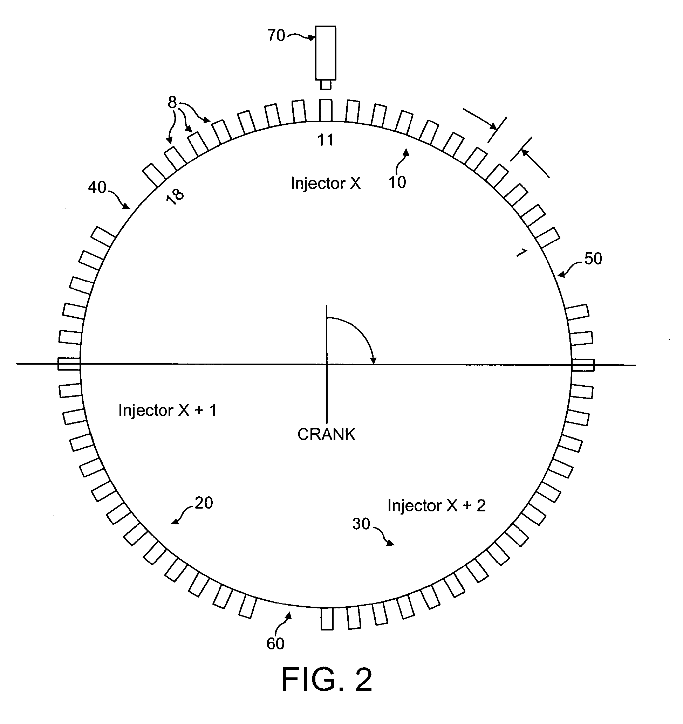

Referring to Figure 2, the crankshaft flywheel typically comprises a number of regularly spaced teeth 8 (only some of which are identified) on its outer periphery which are arranged into three groups 10, 20, 30. Each group 10, 20, 30 is associated with an injector (injector X, injector X+1 and injector X+2) and each group comprises 18 teeth which are regularly spaced at 6-degree intervals. The group of teeth for injector X are partially numbered (teeth 1, 11 and 18 are numbered). For example, the first group of teeth 10 is associated with injector I1, the second group of teeth 20 is associated with injector 12 and the third group of teeth 30 is associated with injector 13.

Three regions 40, 50, 60 on the flywheel are machined so as to define "missing teeth" (i.e. regions without a tooth). A crankshaft sensor 70 (for example a variable reluctance sensor) is used to detect motion of the crankshaft teeth (in particular, the position of the missing teeth 40, 50, 60) and a decoded signal output from the sensor is then used to provide position information on each of the cylinder pistons.

A cam sensor (not shown) comprising seven teeth is mounted on the cam. One of the cam sensor teeth is used to identify the start of the predetermined cylinder sequence, whilst the six remaining teeth are used to detect the start of the cylinder cycle for a respective one of the six cylinders (i.e. tooth 1 position).

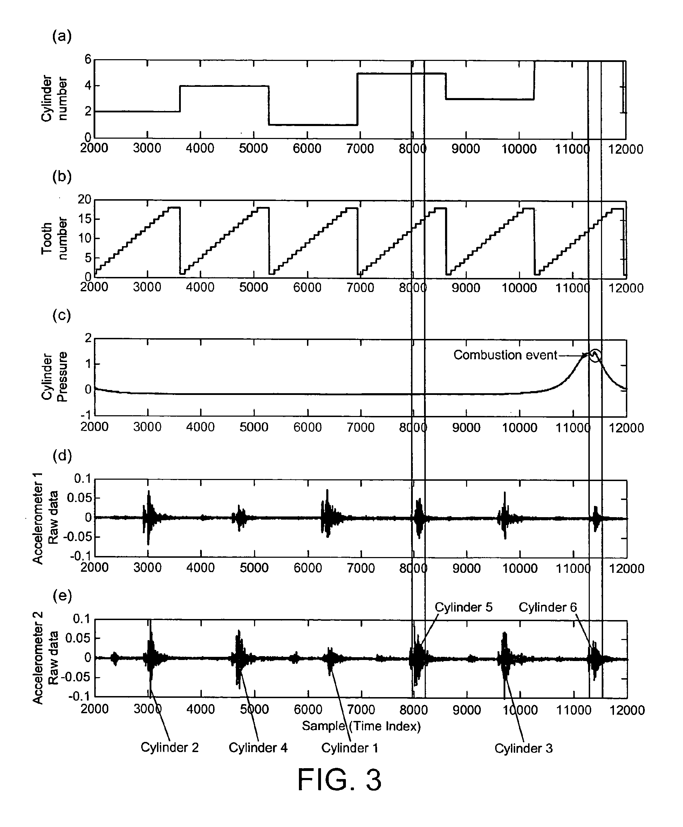

The way in which the cam sensor and the crankshaft sensor 70 determine cylinder position information and the start of the cylinder sequence is well known in the field of engine technology and would be familiar to a person skilled in this art.
Referring to Figure 3, various aspects of engine operation are illustrated over a time period corresponding to a 720° revolution of the crankshaft. In Figure 3(a) it can be seen that the firing order of the cylinders (i.e. the order in which combustion takes places in the cylinders) is C1, C5, C3, C6, C2, C4, as described previously. Figure 3(b) shows the position of the flywheel teeth and Figure 3(c) shows the pressure output signal from a cylinder pressure sensor associated with the sixth cylinder C6 (note that it is not necessary for a cylinder pressure sensor to be fitted in order to implement the presently described embodiment).

Figures 3(d) and 3(e) show the first and second accelerometer voltage output signals respectively. The output signal from both accelerometers will be influenced by events in all cylinders, but the location of the accelerometer relative to the cylinder will influence the amplitude of the signal. For example, referring to the first accelerometer output signal in Figure 3(d), it can be seen that the amplitude is relatively high for the firing of cylinders C1, C2 and C3, which are the three cylinders closest to the first accelerometer A1 in Figure 1. Likewise, referring to the second accelerometer output signal in Figure 3(e), it can be seen that the amplitude is relatively high for the firing of cylinders C4, C5 and C6. As the second accelerometer A2 is mounted part way along the engine, it provides a relatively high amplitude signal for cylinders C2 and C3 also. The firing of cylinder C1 is only detected with relatively low amplitude by the second accelerometer A2 as it is spaced from cylinder 1 by three cylinder positions. The raw output signals from the first and second accelerometers A1, A2 are not only influenced by cylinder firing, but also include contributions from unwanted sources, such as road noise, engine vibration, atmospheric pressure variation, the closure of inlet and exhaust valves and piston movement.

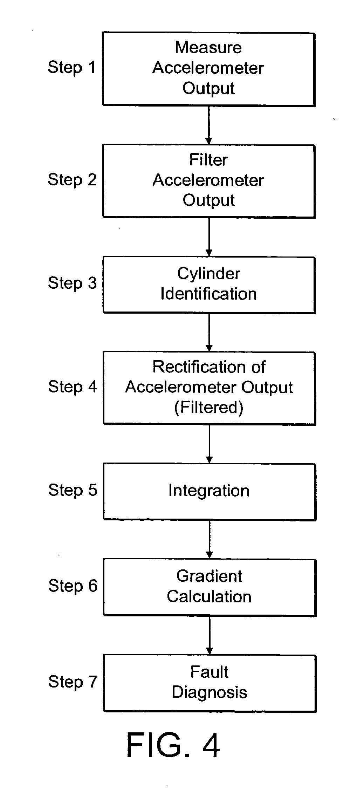

The fault diagnosis method is illustrated in the flow diagram of Figure 4, including steps 1 to 7, and will now be described in further detail.

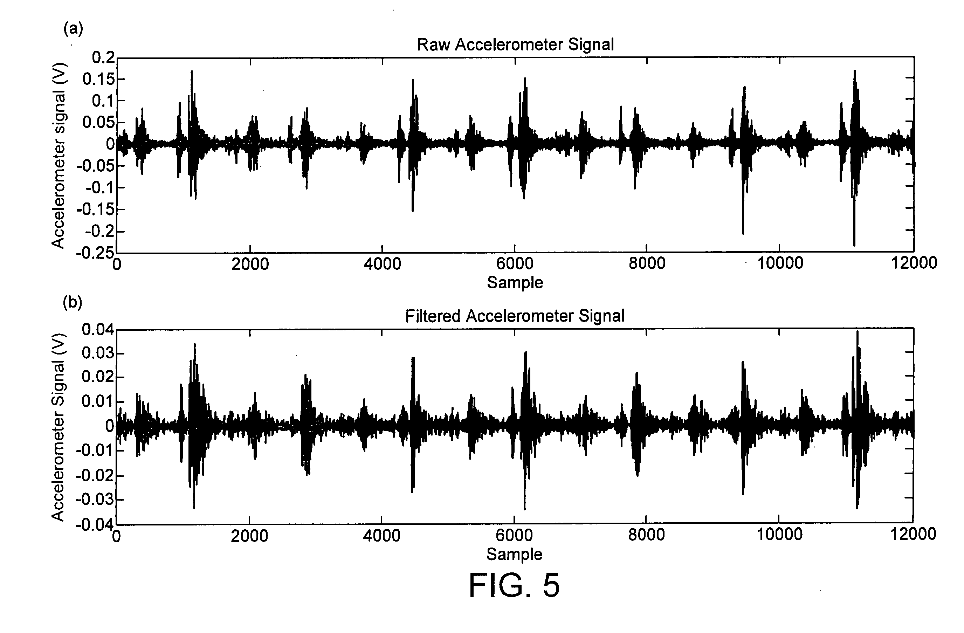

The method of the invention is implemented by a diagnosis unit forming a part of the ECU. As a first step in the fault diagnosis method (step 1), the raw output signal is collected from the first and second accelerometers A1, A2. Figure 5(a) shows an example of the raw output signal measured by the first accelerometer A1 (the data is similar to that shown in Figure 3(d)). A filter is then applied to the output signal in Figure 5(a) (step 2) to remove any spurious low frequency contributions (for example, due to road noise, vehicle/engine vibration, atmospheric pressure variations, the closure of inlet and exhaust valves and piston movement) and to remove any spurious high frequency contributions (for example, due to background electrical noise or sidebands at fundamental frequency multiples).

The output signal is typically filtered over a range of 3-9 kHz, preferably 4-8 kHz and more preferably 5-7 kHz. However, depending on the particular engine application, different frequency ranges for the filtered output signal may be selected. It will also be necessary to select a filter range which captures data within the linear response section for the particular accelerometer, which will vary for different accelerometer types.

The filtering process is repeated for the second accelerometer A2 to provide a filtered output signal from the second accelerometer also.

Figure 5(b) shows the filtered output signal corresponding to the data in Figure 5(a).

Once the accelerometer output signal has been filtered, sections corresponding to each of the different cylinders are then processed separately. Which output signal section corresponds to which cylinder can be determined (step 3) based on a combination of the crank sensor output, the cam sensor output, and the cylinder firing order, as illustrated in Figure 3.

For each cylinder of the example engine, the interesting part of the filtered signal is that section corresponding to combustion events within that cylinder, which is typically that section between tooth positions 13 to 16.

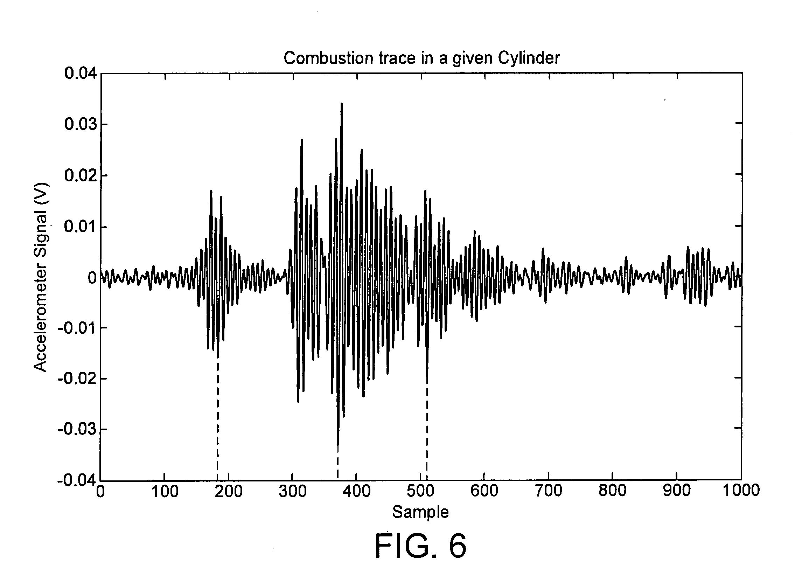

The section associated with each cylinder is then divided into smaller sections, as shown in Figure 6. The accelerometer signal is in an analogue format on receipt at the ECU and is converted through an ADC (Analogue to Digital Converter) which converts the continuous analogue signal into a digital representation (i.e. the signal is split into samples). The number of samples is dependent on the sampling frequency that the ADC is configured to apply. The interesting range of the data corresponding to the combustion events is known (e.g. the tooth range over which combustion events occur) and hence the accelerometer output signal, and knowledge of the cylinder number and crankshaft position are all known simultaneously. The signal processing can therefore be done "on-line" without the need to store large amounts of data in buffers for later manipulation.

The filtered output signal represents a pre-combustion event, a main combustion event and a post-combustion event from only one of the cylinders. In Figure 6, the mid-size amplitude around sample 180 represents the pre-combustion event in the selected cylinder, the larger amplitude around sample 370 represents the main combustion event in the selected cylinder and the mid-size amplitude around sample 510 represents the post combustion event in the selected cylinder.

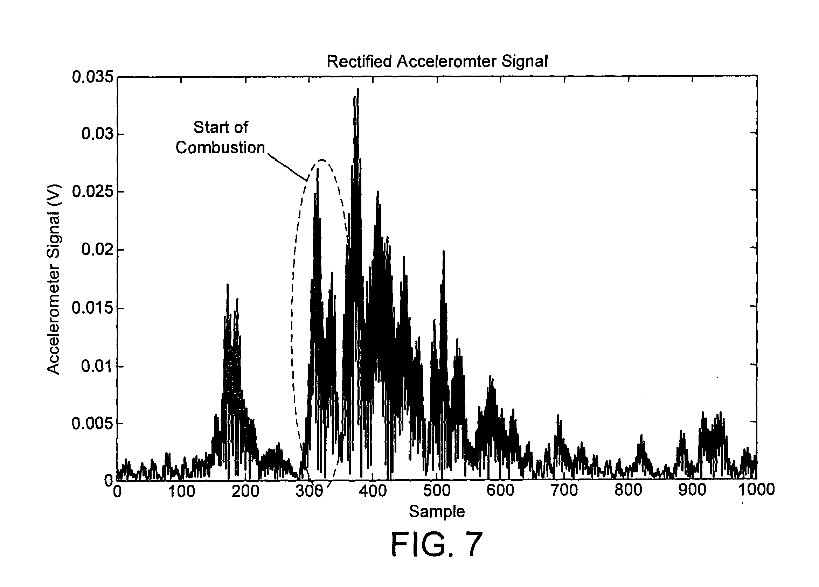

The selected section of the filtered output signal in Figure 6 is then rectified (step 4), as shown in Figure 7, to convert the negative amplitudes of the filtered output signal into positive amplitudes and to prepare the signal for a subsequent integration step. In practice, output signals from the accelerometers are collected from a number of cylinder cycles (typically 30) to produce a clearer quantitative representation of the combustion event(s) in any given cylinder.

The rectified signals are then integrated (step 5) to give an accumulated integration. As an alternative, an averaged accumulated integration may be calculated (i.e. averaged over the number of cycles), which is mathematically equivalent to the accumulated integration. The rectification and integration process is carried out for each of the six cylinders.

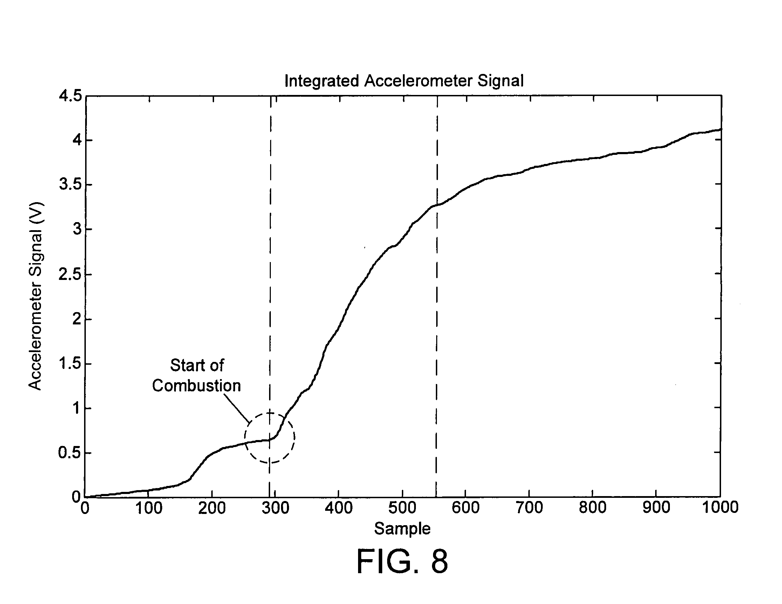

Figure 8 shows the integration of the rectified filtered signal in Figure 7 for combustion events sampled in a single cylinder over a part of the cylinder cycle (tooth 9 to tooth 18). The graph can be separated into three sections; a first section (typically corresponding to tooth positions 9 - 13), a second section (typically corresponding to tooth positions 13 - 16) and a third section (typically corresponding to tooth positions 16 - 18).

The first, second and third sections of the accumulated integration correspond to the pre-combustion event, the main combustion event and the post combustion event, respectively. A straight-line approximation technique is then used to determine the gradient of each section (step 6). By measuring the gradients of the three sections, and by comparing the gradients with each other, it is possible to determine various features of the combustion process within the selected cylinder and, in particular, to identify specific fault types within the selected cylinder (step 7).

The combustion samples that are recorded within a given cylinder cycle may be obtained at a given sampling frequency (e.g. 50 kHz), but this would give a different number of samples depending on engine speed. In one embodiment, therefore, it is necessary to adjust the sampling frequency with engine speed. Alternatively, the combustion samples may be recorded per degree of crankshaft rotation, and not per second, removing the dependence on engine speed.

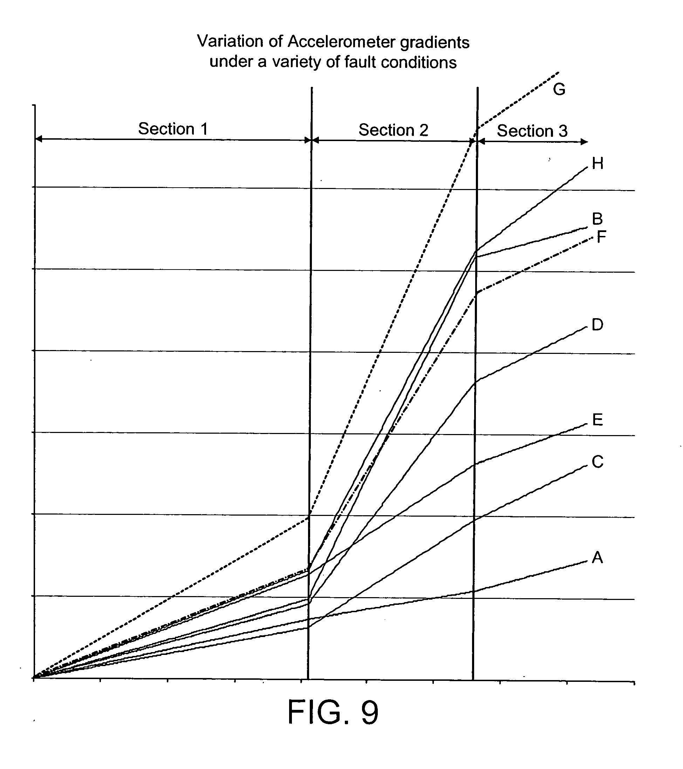

Figure 9 shows the result of a straight-line approximation of an accumulative integration of a rectified signal for a selected one of the cylinders for various fault conditions. Seven difficult fault conditions are shown in Figure 9, labelled as lines A to G:
A = Misfire
B = Fuel quantity and pressure variation
C = Injector fault causing low injection pressure
D = Fuel pump (EUP) failure causing low injection pressure
E = Fuel pump (EUP) failure causing very low injection pressure
F = Injection timing delay
G = Injector needle valve stuck open

The straight-line approximation labelled H is a control representing no fault condition. The lines A to E have been obtained from real data obtained from an engine running at 1200erpm and loaded with 500 Nm, whereas the lines F and G are expected results.

Some of the above-mentioned faults are described in further detail below.

### Misfire (Line A)

For cylinder misfire (line A), the fault is indicated by a gradient that is approximately equal in all three sections of the accumulated integration. Therefore, if (i) the ratio of the gradient in section 1 to the gradient in section 3 is unity, or is close to unity, and (ii) the gradient in section 2 to the gradient in section 1 is unity, or is close to unity, or (iii) the gradient in section 2 to the gradient in section 3 is unity, or is close to unity, there is an indication that a misfire has occurred in the selected cylinder. In other words, a gradient ratio of approximately 1 between any two pairs of the sections provides an indication that a misfire has occurred in the selected cylinder.

A more accurate method of identifying misfire would require a gradient ratio of approximately one between all three pairs of gradient measurements (i.e. section 1:2, section 2:3, section 1:3).

### Injection Pressure Changes: EUP Failure (Lines D & E)

Changes in the injection pressure alter the mix between the fuel and air in the cylinder as it affects the size of the fuel particles injected and directly impacts on the quality of combustion (hence affecting emissions levels). A reduction in fuel pressure in the EUP (e.g. due to EUP failure) causes a reduction in the amplitude of the accelerometer signal for combustion in the associated cylinder and, hence, can be identified by a relatively shallow gradient for the main combustion (section 2) and the post combustion (section 3). It can be seen in Figure 9, for example, that the gradient of section 2 line D (EUP causing low injection pressure) is steeper than the gradient of section 2 line E (EUP causing very low injection pressure): a reduction in the severity of injection pressure failure is reflected in the reduction in deviation away from the control line H for the main combustion section 2.

By determining the ratio of the gradient between (i) section 3 and section 2 and (ii) section 3 and section 1 and (iii) section 2 and section 1, it is possible to identify a low injection pressure fault (i.e. EUP failure causing low injection pressure). Likewise, the ratio of the gradients of the different sections of the straight-line approximation can be used to indicate a very low injection pressure fault (i.e. EUP failure causing very low injection pressure).

### Fuel Quantity and Inverse Pressure Failures (Line B)

The higher the injection pressure of fuel into a cylinder, the smaller the fuel droplets and the better the air/fuel mix. Variation in the fuel quantity delivered into the combustion chamber affects the completeness of the oxidisation process and has a direct impact on emissions.

It can be seen by comparing line H (control) with line B that the gradients of sections 2 and 3 are substantially identical, so it is necessary to use the gradient of section 3 to determine a fuel quantity fault. The gradient of section 3 of line B is substantially reduced compared with that of the control (line H) in section 3. Therefore, where it is determined that the ratio of the gradient in section 3 is much shallower than the gradient in section 2, but the ratio of the gradient in section 2 to that in section 1 corresponds to that of the control gradients in sections 1 and 2 (line H), this is a good indication of a fuel delivery quantity fault in the selected cylinder.

### Injection Timing Delay (Line F)

Within the EUP, a spill valve controls the timing of fuel pressurisation within the pumping element, whereas a nozzle control valve of the injector is provided to control the timing of fuel injection into the cylinder. The spill valve can also be used to control injection timing. The process of fuel injection and its efficiency is dependent on the nozzle control valve and spill valve opening times. Changes to the timing of operation of the spill and nozzle control valves lead to variations in the quantity and pressure at which fuel is delivered, which in turn can affect combustion quality in the faulty cylinder.

For an injection timing delay (line F), it can be seen that there is a slight deviation of the gradient in section 2 compared with the control (line H) (i.e. the gradient in section 2 is shallower than the control gradient in section 2), and a greater deviation of the gradient in section 3 compared with the control (line H). The gradient in section 1 substantially follows that of the control (line H).

Comparing the ratio of (i) the gradient of section 3 with the gradient of section 2 and (ii) the gradient of section 2 with the gradient of section 1 and (iii) the gradient of section 3 with the gradient of section 1, can be used to provide an indication of an injection timing delay.

### Injector Needle Valve Stuck Open (Line G)

Excessive levels of fuelling increase the level of emissions as a result of an incomplete combustion. Fuel quantity failures can be caused by mechanical damage to the injector needle valve such that it is open all the time, or stuck closed all the time, leading to misfire (as discussed above).

The increase in fuelling as a result of the injector needle valve being stuck open leads to an increase in combustion signal strength (i.e. an increase in the amplitude of the raw accelerometer output signal), giving a higher cylinder pressure level. Due to the presence of fuel in the cylinder during the compression stroke, the combustion can start earlier than usual in a needle valve stuck open fault. This results in a steeper gradient in section 1. Also, due to the increase in the amount of fuel delivered in the cylinder, the combustion quantity is greatly increased in sections 2 and 3.

As seen in Figure 9, an injector needle valve stuck open fault gives rise to a steeper gradient in section 2 compared to the control (line H), and a similar gradient in section 3 to the control (line H). The gradient in section 1 is steeper than the gradient of the control (line H).

Comparing the ratio of (i) the gradient of section 3 with the gradient of section 2 and (ii) the gradient of section 2 with the gradient of section 1 and (iii) the gradient of section 3 with the gradient of section 1, can be used to provide an indication of an injector needle valve stuck open fault.

### Injector Fault Causing Low Injection Pressure (Line C)

As seen in Figure 9, low injection pressure resulting from an injector fault, for example a cracked injector body, gives gradients in sections 2 and 3 which are substantially identical. If a gradient ratio of 1 is determined between sections 2 and 3, in combination with a shallower gradient in section 1, this provides an indication that there has been a low pressure injection into the cylinder resulting from an injector fault.

### Similar Faulty Behaviour

If similar cylinder faults are identified in all cylinders that a common factor (e.g. fuel quality) is affecting the diagnostic measurement. As this should not greatly affect the ratios of the gradient, the diagnostic method of the invention will still work.

### Calibration

The method of the invention may be used with calibration data obtained from a calibration process carried out prior to engine running, whereby different types of fault and control gradients (line H) are modelled or measured on a test engine over the engine speed and load range and are stored in the ECU for comparison with the processed accelerometer data, as in Figure 9. For example, the ratio of the gradient sections 1, 2 and 3 is calculated over a range of speed and load conditions for each of the various fault types and ratio values are stored in the ECU. A comparison of the measured gradient ratios during engine running with the stored ratio values then provides an indication of specific fault type.

Because the method of the invention relies on comparing a gradient ratio, rather than comparing specific gradient measurements to stored gradient measurements, the fault diagnosis is independent of any fluctuations in engine operation which the calibration may not account for (e.g. fluctuations due to engine wear, temperature, and driving conditions).

A further advantage of the invention is that different fault types in different cylinders can be distinguished, as the fault diagnosis is applied to each cylinder independently of the others.

In an alternative embodiment of the invention, the gradients of the different sections of the accumulated integration may be compared directly with pre-stored calibration values of the gradients in each section. For example, a gradient measurement that is very low, relative to other fault types or to the control (line H), is indicative of a misfire. Preferably, the pre-stored calibration values will be stored in look-up tables or data maps, each representative of a particular engine operating condition (e.g. speed and load). Such alternative methods as this do not accommodate the aforementioned fluctuations in engine operation.

### Compensating Cylinders

ECUs are typically programmed so that, if a fault occurs in one of the cylinders, at least one of the other cylinders will compensate for the faulty cylinder. In the six cylinder engine in Figure 1, for example, it is usual for one of the three cylinders firing after a faulty cylinder (e.g. cylinder misfire) to compensate for the fault.

In a further step of the fault diagnosis method of the present invention, it is possible to confirm the detection of a fault in one of the cylinders by looking at the gradient ratios for the cylinder or cylinders that fire subsequently. For example, if a fault is detected in cylinder C1 in the engine of Figure 1, measurements determined from cylinders C5, and even cylinders C3 and C6, will indicate that these cylinders are "compensating" cylinders, hence confirming that a fault exists in cylinder C1. This additional step improves the accuracy of the invention.

### Other Variants

Various modifications to the aforementioned example may be made, without departing from the scope of the invention as set out in the claims. For example, in order to identify which sections of the accelerometer output signals (e.g. as in Figure 3(e) and Figure 5(a) or Figure 5(b)) relate to which cylinder, one the cylinders may be provided with a cylinder pressure sensor to avoid the need to use the cam sensor signal. By way of example, Figure 3(c) shows the output signal from a cylinder pressure sensor fitted to the sixth engine cylinder C6. It can be seen by comparing Figure 3(c) with Figure 3(e) that the peak in the cylinder pressure sensor output signal corresponds to the final peak in the accelerometer output signal in Figure 3(e), which represents a combustion event in the sixth cylinder. By providing a cylinder pressure sensor on one of the cylinders, the output signal can therefore be used, in conjunction with the cylinder firing order and the crank shaft position measurements, to identify which sections of the accelerometer output signal relate to which cylinder.

In another embodiment to that described previously, it is possible to remove one of the accelerometer sensors (A1 or A2) and to rely on the output signals from only one accelerometer to contribute to the gradient measurements. In this case, the single accelerometer is preferably position more centrally along the bank of cylinders e.g. mounted on cylinder C3 or C4 in Figure 1. However, the use of two accelerometer sensors provides a benefit of redundancy, so that should one of the accelerometers fail, the other can still be used to obtain gradient information from all cylinders. With two accelerometers, it is also possible to use one of the accelerometers to check the health of the other accelerometer, for example by comparing the gradient measurements for each cylinder, as measured by each accelerometer, separately. The step of checking the health of one of the accelerometers by looking at the gradient measurements for the same cylinder using both accelerometers provides a further preferred step of the invention.

Although the method of the invention has been described with reference to a six cylinder engine, it may be used in an engine having any number of cylinders, including a single cylinder engine.

## Claims

1. A method for determining a fault condition of a fuel system of an engine, the engine comprising at least one cylinder (C1-C6), the or each cylinder comprising a combustion chamber into which fuel is injected by an associated fuel injector of the fuel system and within which, in use, combustion events occur throughout a cycle of the cylinder, and at least one sensor (A1, A2) for providing an output signal which is representative of the combustion events within the or each cylinder, the method comprising:
(i) analysing the output signal from the at least one sensor (A1, A2) so as to identify the occurrence of a combustion event in the or each cylinder,
(ii) for the or each cylinder, integrating the output signal to provide an integrated output signal,
(iii) calculating a first gradient measurement for a first section of the integrated output signal for the or each cylinder, and
(iv) comparing the first gradient measurement with at least a second gradient measurement to identify the presence and nature of a fault type within the associated cylinder.

2. The method as claimed in claim 1, further comprising calculating the second gradient measurement by calculating the gradient for a second section of the integrated output signal for the or each cylinder, and, in step (iv), comparing the first gradient measurement and the second gradient measurement with one another to identify the presence and nature of the fault type within the associated cylinder.

3. The method as claimed in claim 2, further comprising, at step (iii), calculating a third gradient measurement for a third section of the integrated output signal for the or each cylinder.

4. The method as claimed in claim 3, further comprising, at step (iv), comparing at least one of (a) the first and third gradient measurements and (b) the second and third gradient measurements, in addition to comparing the first and second gradient measurements.

5. The method as claimed in claim 3 or claim 4, wherein each of the first, second and third gradient measurements corresponds to a respective section of the integrated output signal, each section representing any one of the following: a pre-injection event, a main injection event or a post-injection event of the cylinder cycle.

6. The method as claimed in claim 5, wherein step (iv) includes comparing the gradient measurements of at least one of the pre-injection and the main injection, the main injection and the post injection and the pre-injection and post injection, to determine the fault type.

7. The method as claimed in any of claims 2 to 6, wherein the comparison of the gradient measurements in step (iv) provides a ratio for comparison with pre-determined calibration ratio values representative of specific fault types.

8. The method as claimed in any of claims 2 to 7 when applied to an engine having at least two cylinders, the method further comprising:
identifying, as a compensating cylinder, a cylinder within which combustion occurs immediately following combustion in a faulty cylinder, and
analysing the first and second gradient measurements of the compensating cylinder to confirm the presence of the fault in the faulty cylinder.

9. The method as claimed in claim 1, wherein the second gradient measurement is a pre-determined calibration gradient.

10. The method as claimed in claim 9, wherein the pre-determined calibration gradient is derived from one of a plurality of look-up tables or data maps, each representing a different engine operating condition.

11. The method as claimed in any of claims 1 to 10, wherein the output signal from the at least one sensor (A1, A2) includes positive and negative components, the method further comprising:
prior to step (iii), rectifying the output signal from the at least one sensor (A1, A2) to remove the negative components of the output signal, and
integrating the rectified output signal to provide the integrated output signal.

12. The method as claimed in any of claims 1 to 11, further comprising:
prior to step (ii), repeating step (i) for a number of cycles for each cylinder.

13. The method as claimed in any of claims 1 to 12, further comprising, prior to step (ii), applying a filter to the output signal from the at least one sensor (A1, A2) so as to remove signal components below a minimum frequency.

14. The method as claimed in any of claims 1 to 13, further comprising, prior to step (ii), applying a filter to the output signal from the at least one sensor (A1, A2) so as to remove signal components greater than a maximum frequency.

15. The method of any of claims 1 to 14, wherein the engine includes at least a first and a second sensor (A1, A2), the method further comprising:
performing steps (i) and (ii) for the first and the second sensor so as to provide an integrated output signal for both sensors (A1, A2) which is derived from a combustion event in the same cylinder,
performing step (iii) for both the first and the second sensor (A1, A2), and
comparing the first gradient measurement for the first sensor with the first gradient measurement from the second sensor so as to check a state of health of the first and/or second sensor.

16. A diagnostic unit for determining a fault condition of a fuel system of an engine, the engine comprising at least one cylinder (C1-C6), the or each cylinder comprising a combustion chamber into which fuel is injected by an associated fuel injector of the fuel system and within which, in use, combustion events occur throughout a cycle of the cylinder, and at least one sensor (accelerometer A1, A2) for providing an output signal which is representative of the combustion events within the or each cylinder, the diagnostic unit comprising:
means for analysing the output signal from the at least one sensor so as to identify the occurrence of a combustion event in the or each cylinder,
means for integrating the output signal to provide an integrated output signal for the or each cylinder,
means for calculating a first gradient measurement for a first section of the integrated output signal for the or each cylinder, and
means for comparing the first gradient measurement with at least a second gradient measurement to identify the presence and nature of a fault type within the associated cylinder.

17. The diagnostic unit of claim 16, further comprising means for calculating a second gradient measurement for a second section of the integrated output signal for the or each cylinder, and wherein said means for comparing is configured to compare the first and second gradient measurements with one another to identify the presence and nature of the fault type within the associated cylinder.

18. An engine control unit comprising a diagnostic unit as claimed in claim 16 or claim 17.

19. A data carrier comprising a computer program arranged to configure a diagnostic unit or an engine control unit to implement the method according to any one of claims 1 to 15.
